# FASCICULE DE BREVET EUROPEEN

(11) **EP 1 479 601 B1**
(45) Date de publication et mention de la délivrance du brevet: **26.04.2006**
(21) Numéro de dépôt: 04291285.7
(22) Date de dépôt: 19.05.2004
(51) Int. Cl.: B62K 15/00

(54) **Bicyclette pliable d'un nouveau type**
Klappfahrrad
Folding bicycle

(30) Priorité: 23.05.2003 FR 0306209
(43) Date de publication de la demande: 24.11.2004
(73) Titulaire: Lefranc, Louis Martin Marc Marie, 44000 Nantes (FR)
(72) Inventeur: Lefranc, Louis Martin Marc Marie, 44000 Nantes (FR)
(74) Mandataire: Fosse, Danièle

(56) Documents cités:
- WO-A-00/29277
- WO-A-98/06621
- WO-A-99/21750
- US-A- 4 598 923
- PATENT ABSTRACTS OF JAPAN vol. 015, no. 049 (M-1078), 6 février 1991 (1991-02-06) & JP 02 283585 A (MATSUSHITA ELECTRIC IND CO LTD), 21 novembre 1990 (1990-11-21)

## Description

La présente invention concerne une bicyclette pliable dont les roues avant et arrière sont fixées à un châssis pliable apte à passer d'une position dépliée, dite de conduite, à une position pliée, de transport ou de stockage.

Les bicyclettes pliantes existent depuis de nombreuses années comme l'illustrent en particulier les demandes internationales WO 88/05394, WO 96/01204, WO 98/06621, WO 99/21750 et WO 00/29277. Elles présentent l'avantage d'offrir un encombrement réduit facilitant le transport ou le stockage de la bicyclette en position repliée du châssis. La gageure est d'obtenir l'encombrement le plus réduit possible. Ainsi, la demande internationale WO 98/06621 décrit un vélo dont les roues avant et arrière sont fixées à un cadre pliable. La roue arrière est fixée d'un seul côté au cadre tandis que la roue avant est fixée d'un seul côté à un tube supportant le guidon et monté pivotant par rapport au cadre. II est prévu que les roues de ce vélo aient des diamètres différents. Ainsi, la roue avant de diamètre le plus réduit est recouverte par la roue de plus grand diamètre, en position repliée du cadre, de sorte que la roue de plus petit diamètre s'encastre dans la roue de plus grand diamètre. Une fois le vélo replié, l'encombrement est réduit. II demeure toutefois supérieur au diamètre de la plus grande roue du fait que le châssis s'étend au-delà de l'ensemble formé par les deux roues logées l'une dans l'autre et l'ensemble est de ce fait difficile à transporter du fait de sa forme. Par ailleurs, la liaison articulée autorisant un pliage du châssis nuit, en raison de son orientation (perpendiculaire à l'axe des roues) et de sa position médiane sur le cadre, à la solidité d'un tel vélo. Une solution similaire est décrite dans la demande internationale WO 00/29277.

De la même manière, la demande internationale WO 96/01204 décrit un vélo dont le châssis est apte à se replier pour permettre un positionnement côte à côte des roues, le châssis s'étendant alors de part et d'autre des roues et présentant à nouveau un encombrement supérieur au diamètre des roues.

Enfin, la demande internationale WO 99/21750 décrit une bicyclette repliable dont le cadre est de conception futuriste tandis que les roues sont à l'inverse de conception parfaitement classique, c'est-à-dire avec un voile de jante contenu dans le plan des roues. Dans ce document, les roues sont rabattues de part et d'autre du châssis pour former une superposition constituée d'une roue, du châssis, puis de l'autre roue. II en résulte un encombrement important en largeur de cet ensemble. A l'inverse, l'encombrement en longueur d'un tel ensemble est réduit puisque aucun élément ne fait saillie du diamètre des roues. En conséquence, une telle bicyclette présente deux inconvénients, à savoir un encombrement important en largeur et la nécessité de modifier totalement la conception du cadre par rapport à un cadre traditionnel.

On connaît enfin, à travers le brevet japonais JP 02283585, une bicyclette pliable dont les roues avant et arrière sont des roues à voile de jante lenticulaire constituant chacune une demi-coquille, ces demi-coquilles formant à l'état juxtaposé ou superposé des roues une coquille délimitant une cavité dimensionnée pour loger le châssis en position pliée de transport. Dans le mode de réalisation décrit dans le brevet JP 02283585, le rangement du châssis est obtenu par démontage de manchons, représentés en 11 aux figures, qui servent à la liaison des différents éléments de châssis entre eux. La présence de manchons sous forme de pièces démontables engendre deux inconvénients, à savoir d'une part un temps de montage et de démontage important du châssis du vélo, d'autre part un risque élevé de perte des pièces de liaison reliant les différentes parties du châssis entre elles.

Un but de la présente invention est donc de proposer une bicyclette pliable dont la conception permet, avec une architecture classique de châssis de bicyclette, de réduire l'encombrement en longueur et en largeur d'une telle bicyclette.

Un autre but de la présente invention est de proposer une bicyclette pliable dont la conception permet, à l'état plié du châssis, de loger la totalité de ce dernier à l'intérieur des roues aptes à former, à l'état juxtaposé ou superposé, une enveloppe creuse, le passage de la position pliée à la position dépliée ou inversement pouvant s'effectuer en un temps court avec un risque limité d'erreurs de montage et/ou de perte des pièces constitutives du châssis.

A cet effet, l'invention a pour objet une bicyclette pliable dont les roues avant et arrière sont fixées à un châssis pliable apte à passer d'une position dépliée, dite de conduite, à une position pliée, de transport ou de stockage, ces roues, de dimension similaire, étant des roues à voile de jante lenticulaire et constituant chacune une demi-coquille, ces demi-coquilles formant, à l'état juxtaposé et/ou superposé des roues obtenu de préférence par démontage d'au moins l'une des roues du châssis, une coquille délimitant une cavité dimensionnée pour loger le châssis en position pliée de transport, caractérisée en ce que le châssis est un châssis articulé constitué essentiellement d'un cadre, d'une fourche reliant le cadre et la roue avant et d'un bras portant le pédalier et la transmission et reliant le cadre à la roue arrière, fourche et bras étant respectivement reliés au cadre par une liaison pivot d'axe sensiblement parallèle à l'axe de rotation des roues.

L'invention sera bien comprise à la lecture de la description suivante d'exemples de réalisation, en référence aux dessins annexés dans lesquels :
la figure 1 représente une vue de dessus d'une bicyclette conforme à l'invention ;
la figure 2 représente une vue de dessus des roues de la bicyclette à l'état assemblé ou juxtaposé de manière à former une coquille à l'intérieur de laquelle peut être logé le châssis en position de transport ;
la figure 3 représente une vue de côté d'une bicyclette conforme à l'invention ;
les figures 4 et 5 représentent une vue en coupe des roues à l'état juxtaposé, la figure 4 représentant, à l'état plié, le châssis logé à l'intérieur des deux demi-coquilles tandis que la figure 5 représente la coquille formée en l'absence du châssis ;
les figures 6 et 7 représentent le châssis au cours de son pliage à l'état démonté des roues en vue de son rangement à l'intérieur de la coquille formée par les deux roues à l'état juxtaposé ou superposé ;
la figure 8 représente une vue de côté de la' coquille formée par les roues en position pliée du châssis à l'intérieur de la coquille et
la figure 9 représente une vue de côté d'une housse logeant l'ensemble de la bicyclette à l'état plié en vue de permettre son transport.

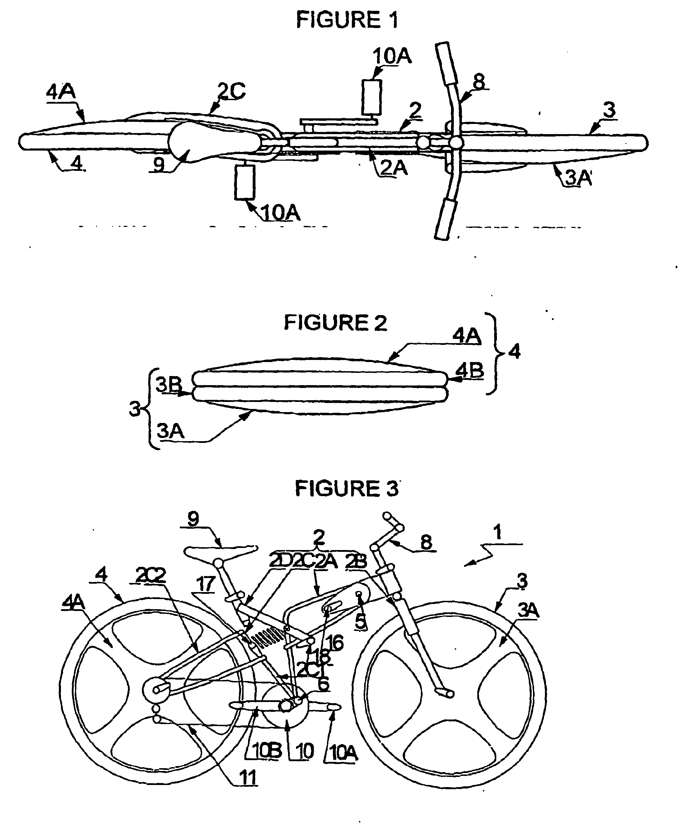

La bicyclette 1 pliable, objet de l'invention, est donc constituée essentiellement d'un châssis 2 pliable apte à passer d'une position dépliée, dite de conduite, à une position pliée de transport ou de stockage, et de roues 3 avant et 4 arrière. Les roues 3 et-4 avant et arrière sont des roues de dimension similaire à voile 3A, 4A de jante lenticulaire. Ainsi, chaque roue est équipée d'un voile 3A ou 4A de jante, de forme convexe s'étendant d'un côté du plan de roue. Ce voile coopère avec la jante et le pneu 3B, 4B de la roue pour former une demi-coquille évidée. Dans l'exemple représenté à la figure 1, en position de conduite du châssis 2 et d'alignement des roues 3, 4, les voiles 3A, 4A de jante des roues 3, 4 s'étendent respectivement d'un côté et de l'autre du plan passant par les pneus 3B, 4B des roues 3, 4. Ces demi-coquilles peuvent ainsi former, à l'état juxtaposé et/ou superposé des roues 3, 4 une coquille à parois latérales convexes. La juxtaposition et/ou la superposition à contact des roues est obtenue par démontage d'au moins l'une des roues, de préférence les deux roues du châssis 2. Les deux roues peuvent ainsi venir en contact par leur flanc de pneu et former chacune avec leur voile de jante une paroi convexe de la coquille. Cette coquille délimite ainsi une cavité 12 circulaire ou annulaire organisée autour de l'axe 13 ou moyeu 14 de roue. Cette cavité 12 est dimensionnée pour loger le châssis 2 en position pliée de transport. Ainsi, en position pliée, le châssis 2, logé à l'intérieur de la cavité 12, ne fait en aucun cas saillie du diamètre délimité par les roues 3 et 4 accollées ou jumelées. En outre, comme les roues 3 et 4, lorsqu'elles sont juxtaposées et/ou superposées, sont jumelables l'une à l'autre et occupent à l'état jumelé une position dans laquelle le flanc du pneu 3B d'une roue 3 vient en appui contre le flanc du pneu 48 de l'autre roue 4, il en résulte un encombrement réduit en largeur de l'ensemble. En effet, les flancs de pneu, en contact l'un avec l'autre, constituent ainsi le plan de joint de la coquille formée par juxtaposition et/ou superposition des roues. L'intérêt en outre de cette conception est que les risques de perdre l'un des éléments du châssis sont réduits du fait que l'ensemble est enfermé à l'intérieur de la coquille délimitée par les roues. La -coquille ainsi formée peut être-assimilée à une roue creuse-dont le plan de joint serait formé par les flancs des pneus 3B et 4B en contact d'appui des roues. Cette coquille, qui présente des parois convexes, est ici formée par assemblage de deux roues identiques de manière à constituer une coquille à demi-coquilles symétriques. La cavité 12 ainsi obtenue est une cavité circulaire annulaire.

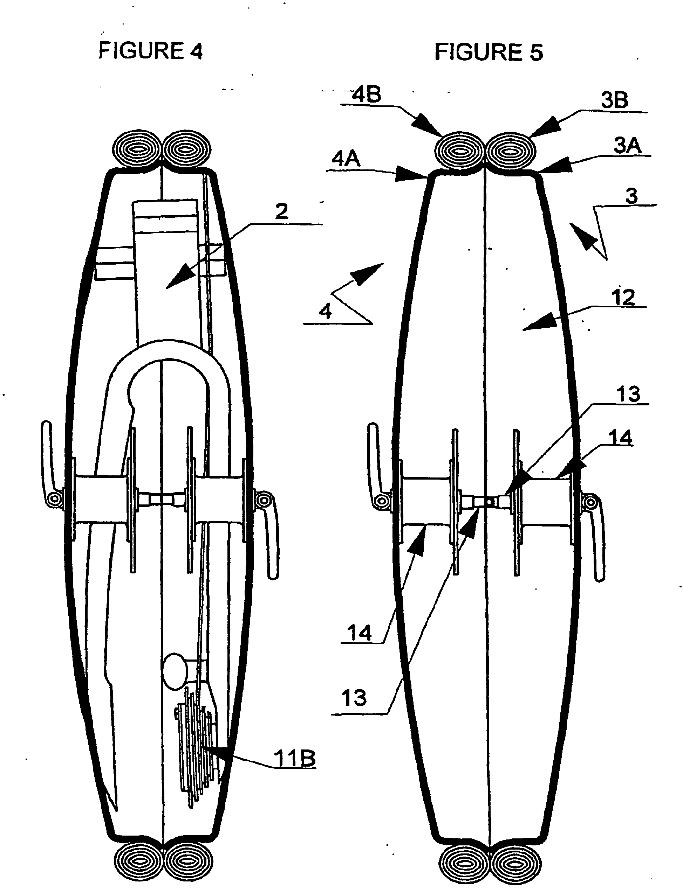

Le châssis 2 est quant à lui un châssis articulé constitué d'un cadre 2A, d'une fourche 2B reliant le cadre 2A et la roue 3 avant et d'un bras 2C portant le pédalier 10 et la transmission 11 et reliant le cadre 2A à la roue 4 arrière. Dans les exemples représentés, fourche 2B et bras 2C sont respectivement reliés au cadre 2A par une liaison 5, 6 pivot d'axe sensiblement parallèle à l'axe de rotation des roues 3, 4. Ainsi, la liaison 5 pivot entre la fourche 2B et le cadre 2A est une liaison verrouillable en position de conduite du châssis. Ce verrouillage est obtenu au moyen d'un axe à serrage rapide représenté en 16 à la figure 3. A cet effet, il est prévu, solidaire de la fourche 2B, une pièce équipée d'un crochet, cette pièce, reliée au cadre 2A par la liaison pivot 5 étant entraînée à pivotement jusqu'à coopération du crochet et de l'axe 16. La liaison 6 pivot entre bras 2C et cadre 2A est quant à elle une liaison non verrouillable. Cette liaison est toutefois limitée en déplacement angulaire au moyen d'un amortisseur 7 démontable disposé entre cadre 2A et bras 2C. Cet amortisseur 7 est à cet effet relié au bras 2C par une attache 17 à serrage rapide. On obtient ainsi un cadre 2A suspendu dont la liaison pivot 6 qui sert à la suspension du cadre 2A est également utilisée pour le pliage du cadre. Cette liaison est positionnée sur le plateau incorporé au pédalier 10. Ce pédalier 10 comporte en outre; de manière classique, des manivelles 10B et des pédales 10A. Les pédales 10A sont rabattables contre les manivelles 10B du pédalier 10 en position de transport du châssis. Le bras 2C, participant à la réalisation du châssis, est quant à lui un bras coudé dont l'une 2C1 des branches 2C1, 2C2 est reliée à la liaison pivot 6 tandis que l'autre branche 2C2 affecte la forme d'un étrier relié à la roue 4 arrière motrice de la bicyclette. Les manivelles 10B du pédalier 10 porté par le bras 2C sont généralement disposées au voisinage de l'extrémité de la branche 2C1 reliée au cadre par la liaison pivot 6. Ces manivelles, en particulier les bras de manivelles, sont dimensionnées pour s'étendre en dessous de la branche 2C2 du bras 2C reliée à la roue 4 arrière, en position de conduite du châssis 2. Ainsi, grâce à cette conception, les manivelles du pédalier peuvent être rapprochées du plateau de pédalier et limiter l'encombrement de l'ensemble. La transmission 11, ou système d'entraînement des roues du vélo, est quant à elle réalisée de manière classique par une chaîne reliant les plateaux positionnés au niveau des bras de manivelle et les pignons positionnés au niveau de l'axe de roue arrière, des dérailleurs avant arrière étant également prévus. II doit être noté que la branche 2C2 du bras 2C est conçue de manière telle qu'elle conserve la totalité des pignons 11 B, en particulier lors du démontage de la roue arrière 4. Enfin, ce châssis 2 comporte, de manière classique, une selle 9 et un guidon 8 montés respectivement de manière amovible l'une sur le cadre 2A, l'autre sur la fourche 2B. Selle 9 et guidon 8 sont ainsi désolidarisés du châssis 2 en position de transport de ce dernier. Dans les exemples représentés, la selle 9 et son tube support associé sont couplés au cadre 2A par l'intermédiaire d'un levier 2D articulé, relié au cadre 2A par une liaison pivot d'axe sensiblement parallèle à l'axe de rotation des roues. Ce levier 2D, verrouillable sur le cadre 2A par l'intermédiaire d'un verrou 18, est équipé d'un manchon dans lequel s'emboîte le tube support de la selle 9. II est à noter que le verrou 18, l'attache 17 et l'axe 16 sont des éléments de même nature, de manipulation identique, formant à chaque fois une attache rapide imperdable.

La fourche 2B du châssis 2 peut être une fourche suspendue incorporant un amortisseur.

Les roues 3 et 4 sont quant à elles jumelées l'une à l'autre par assemblage mécanique, notamment par vissage, des axes 13 ou moyeux 14 de roues en position repliée-du châssis.

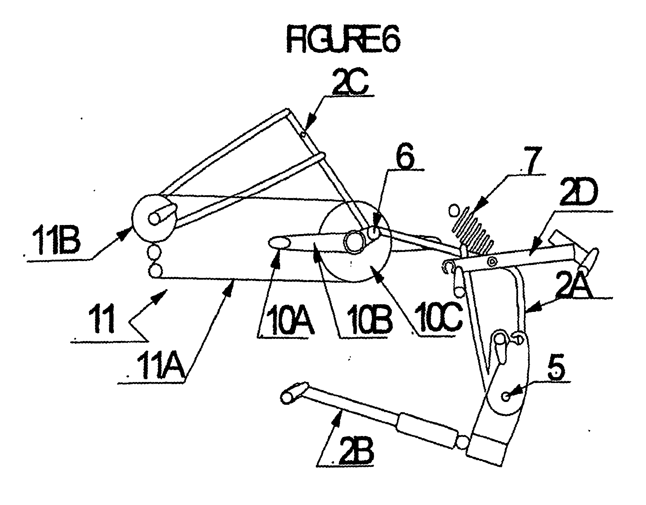

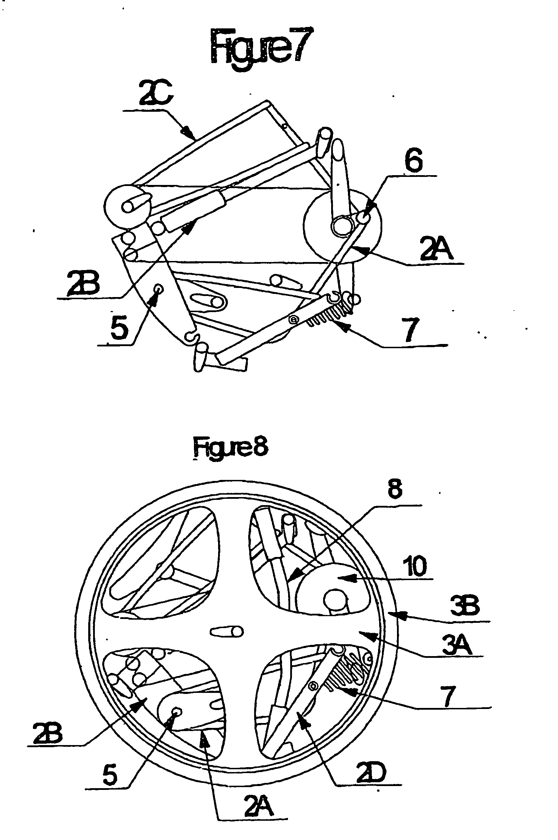

Le pliage du châssis 2 s'effectue de manière conforme à ce qui est représenté aux figures 6 et 7. Ainsi, la selle 9 et le guidon 8 sont dans un premier temps désolidarisées du châssis, le levier 2D support de selle est déverrouillé tandis que les roues 3 et 4 sont démontées du châssis. Ces roues 3 et 4 sont démontées du châssis 2 par simple desserrage de leur axe 13 à serrage rapide de manière en soi connue. L'amortisseur 7 est désolidarisé du bras 2C du châssis 2. La liaison 5 pivot reliant la fourche 2B et le cadre 2A est ensuite déverrouillée par desserrage de l'axe 16 puis le châssis est replié, dans un premier temps, par pivotement du cadre 2A autour de la liaison 6 pivot entre cadre 2A et bras 2C puis, dans un second temps, par pivotement de la fourche 2B autour de sa liaison 5 pivot avec le cadre 2A jusqu'à venir se positionner au voisinage de l'ensemble de pignons. Les pédales sont rabattues contre le corps du pédalier. Le châssis 2 ainsi plié est ensuite logé à l'intérieur de l'une des roues 3, 4 du châssis. L'autre roue peut alors être assemblée à la première roue par l'intermédiaire des axes 13 de roue comme l'illustre la figure 5 où l'axe de la roue arrière est fileté tandis que l'axe de la roue avant est taraudé. Une fois assemblées à contact, en particulier par appui des flancs de pneus l'un contre l'autre, les roues délimitent ainsi une coquille renfermant le châssis. Il est à noter que les voiles 3A, 4A de jante des roues 3 et 4 peuvent être évidés de manière à présenter une configuration étoilée comme l'illustre la figure 3 où chaque branche de l'étoile correspond sensiblement à un rayon de roue. II est à noter qu'avant de jumeler les roues 3 et 4, on introduit à l'intérieur de la cavité 12 délimitée par les coquilles, le guidon et la selle qui ont été préalablement démontés. Le résultat est ainsi conforme à celui représenté à la figure 8. En effet, la coquille obtenue affecte la forme d'une roue évidée logeant un châssis organisé sous forme d'un enroulement autour de l'axe de la roue dans l'espace annulaire laissé libre entre jante, voile de jante et axe de roue.

Pour faciliter le transport d'une telle bicyclette en position pliée du châssis, il est prévu, pour le déplacement au sol de la bicyclette, en position de transport du châssis, une housse 15 équipée extérieurement d'une platine 15B porte-roulettes et d'une poignée 15A. Cette housse 15 est dimensionnée pour loger la coquille formée par l'assemblage des roues 3, 4 et logeant le châssis 2 en position de transport. Ainsi, l'ensemble est déplaçable à la manière d'une valise équipée de roulettes par simple déplacement au sol.

Les opérations nécessaires au pliage du châssis, à savoir démontage de la selle, du guidon et des roues, rabattage des pédales, repliage du châssis après déverrouillage de la liaison pivot 5 puis logement à l'intérieur de l'une des roues et assemblage des roues prennent moins de 5 minutes. Le dépliage du châssis, qui comporte les étapes inverses à celles qui viennent d'être décrites ci-dessus, ne prend également que quelques minutes.

## Revendications

1. Bicyclette (1) pliable dont les roues avant (3) et arrière (4) sont fixées à un châssis (2) pliable apte à passer d'une position dépliée, dite de conduite, à une position pliée, de transport ou de stockage, ces roues (3, 4), de dimension similaire, étant des roues à voile (3A, 4A) de jante lenticulaire et constituant chacune une demi-coquille, ces demi-coquilles formant, à l'état juxtaposé et/ou superposé des roues (3, 4) obtenu de préférence par démontage d'au moins l'une des roues (3, 4) du châssis (2), une coquille délimitant une cavité (12) dimensionnée pour loger le châssis (2) en position pliée de transport,
**caractérisée en ce que** le châssis (2) est un châssis articulé constitué essentiellement d'un cadre (2A), d'une fourche (2B) reliant le cadre (2A) et la roue (3) avant et d'un bras (2C) portant le pédalier (10) et la transmission (11) et reliant le cadre (2A) à la roue (4) arrière, fourche (28) et bras (2C) étant respectivement reliés au cadre (2A) par une liaison (5, 6) pivot d'axe sensiblement parallèle à l'axe de rotation des roues (3, 4).

2. Bicyclette (1) selon la revendication 1,
**caractérisée en ce que**, en position de conduite du châssis (2) et d'alignement des roues (3, 4), les voiles (3A, 4A) de jante des roues (3, 4) s'étendent respectivement d'un côté et de l'autre du plan passant par les pneus (3B, 4B) de roues (3, 4).

3. Bicyclette (1) selon la revendication 1,
**caractérisée en ce que** la liaison (5) pivot entre fourche (2B) et cadre (2A) est une liaison verrouillable en position de conduite du châssis tandis que la liaison (6) pivot entre bras (2C) et cadre (2A) est une liaison non verrouillable mais dont le déplacement angulaire est limité au moyen d'un amortisseur (7) démontable disposé entre cadre (2A) et bras (2C).

4. Bicyclette (1) selon la revendication 3,
**caractérisée en ce que** le bras (2C) est un bras coudé dont l'une (2C1) des branches (2C1, 2C2) est reliée à la liaison pivot (6) tandis que l'autre branche (2C2) affecte la forme d'un étrier relié à la roue (4) arrière motrice de la bicyclette, les manivelles (10B) du pédalier (10) porté par le bras (2C) étant dimensionnées pour s'étendre en dessous de la branche (2C2) du bras (2C) reliée à la roue (4) arrière, en position de conduite du châssis (2).

5. Bicyclette (1) selon l'une des revendications 3 à 5,
**caractérisée en ce que** le châssis (2) comporte en outre une selle (9) et un guidon (8) montés respectivement de manière amovible l'une sur le cadre (2A), l'autre sur la fourche (2B), selle (9) et guidon (8) étant désolidarisés du châssis (2) en position de transport de ce dernier.

6. Bicyclette (1) selon la revendication 5,
**caractérisée en ce que** la selle (9) et son tube support associé sont couplés au cadre (2A) par l'intermédiaire d'un levier (2D) articulé, relié au cadre (2A) par une liaison pivot d'axe sensiblement parallèle à l'axe de rotation des roues (3, 4)

7. Bicyclette (1) selon l'une des revendications 3 à 6,
**caractérisée en ce que** le pédalier (10) est équipé de pédales (10A) rabattables contre les manivelles (10B) en position de transport du châssis.

8. Bicyclette (1) selon l'une des revendications 1 à 7,
**caractérisée en ce que** les roues (3, 4) sont, lorsqu'elles sont juxtaposées et/ou superposées, jumelables l'une à l'autre et occupent à l'état jumelé une position dans laquelle le flanc du pneu (3B) d'une roue (3) vient en appui contre le flanc du pneu (4B) de l'autre roue (4) de manière à constituer le plan de joint de la coquille formée par juxtaposition et/ou superposition des roues.

9. Bicyclette (1) selon la revendication 8,
**caractérisée en ce que** les roues (3, 4) sont jumelées l'une à l'autre par assemblage mécanique, notamment par vissage, des axes (13) ou moyeux (14) de roues.

## Claims

1. Folding bicycle (1), the front wheels (3) and rear wheels (4) of which are fixed to a folding chassis (2), which is capable of passing from an unfolded position, called the riding position, to a folded position, called the transportation or storage position, these wheels (3, 4), of - similar dimension, being -disc-wheels (3-A, 4A) with a lenticular rim and each forxning a half-shell, these half-shells forming, in the juxtaposed state and/or superposed state of the wheels (3, 4), obtained preferably by dismantling at least one of the wheels (3, 4) from the chassis (2), a shell which defines a cavity (12) dimensioned to house the chassis (2) in the folded transportation position, **characterised in that** the chassis (2) is a hinged chassis made up essentitally of a frame (2A), a fork (2B) connecting the frame (2A) and the front wheel (3), and an arm (2C), carrying the crank-gear (10) and the transmission (11) and connecting the frame (2A) to the rear wheel (4), the fork (2B) and arm (2C) respectively being connected to the frame (2A) by a pivot connection (5, 6) having an axis substantially parallel to the axis of rotation of the wheels (3, 4).

2. Bicycle (1) according to claim 1, **characterised in that**, in the riding position of the frame (2) and in the alignment position of the wheels (3, 4), the rimmed discs (3A, 4A) of the wheels (3, 4) respectively extend from one side and from the other side of the plane passing through the tyres (3B, 4B) of wheels (3, 4).

3. Bicycle (1) according to claim 1, **characterised in that** the pivot connection (5) between the fork (2B) and frame (2A) is a connection which is lockable in the riding position of the chassis, while the pivot connection (6) between the arm (2C) and frame (2A) is a non-lockable connection, but the angular displacement of which is limited by means of a removable shock absorber (7) disposed between the frame (2A) and arm (2C).

4. Bicycle (1) according to claim 3, **characterised in that** the arm (2C) is a bent arm with branches (2C1, 2C2), one branch (2C1) of which is connected to the pivot connection (6) while the other branch (2C2) assumes the form of a stirrup connected to the rear driving wheel (4) of the bicycle, the cranks (10B) of the crank-gear (10) carried by the arm (2C) being dimensioned to extend below the branch (2C2) of the arm (2C) connected to the rear wheel (4), in the riding position of the chassis (2).

5. Bicycle (1) according to one of claims 3 to 5, **characterised in that** the chassis (2) additionally includes a saddle (9) and a handlebar arrangement (8), said saddle being mounted in a detachable manner on the frame (2A), and said handlebar arrangement being mounted in a detachable manner on the fork (2B), the saddle (9) and handlebar arrangement (8) being disconnected from the chassis (2) in the transportation position of said chassis.

6. Bicycle (1) according to claim 5, **characterised in that** the saddle (9) and its associated supporting tube are connected to the frame (2A) through the intermediary of a hinged lever (2D), which is connected to the frame (2A) by a pivot connection having an axis substantially parallel to the axis of rotation of the wheels (3, 4).

7. Bicycle (1) according to one of claims 3 to 6, **characterised in that** the crank-gear (10) is fitted with pedals (10A) which fold-up against the cranks (10B) in the transportation position of the chassis.

8. Bicycle (1) according to one of claims 1 to 7, **characterised in that**, when the wheels (3, 4) are juxtaposed and/or superposed, they can be coupled together and occupy, in the coupled state, a position in which the - side of the tyre (3B) of one wheel- (3) is supported against the side of the tyre (4B) of the other wheel (4) so as to constitute the junction plane of the shell formed by juxtaposition and/or superposition of the wheels.

9. Bicycle (1) according to claim 8, **characterised in that** the wheels (3, 4) are coupled together by mechanically assembling together, more especially by screwing together, the wheel spindles (13) or hubs (14).

## Patentansprüche

1. Klappfahrrad (1), dessen Vorderrad (3) und Hinterrad (4) an einem Klapprahmen (2) befestigt sind, der geeignet ist, von einer ausgeklappten so genannten Fahrstellung in eine zusammengeklappte Transport- oder Lagerungsstellung überzugehen, wobei diese ähnlich großen Räder (3, 4) Räder mit linsenförmigem Felgenbett (3A, 4A) sind und jeweils eine Halbschale bilden, wobei diese Halbschalen in dem nebeneinander und/oder übereinander gelegten Zustand der Räder (3, 4), welcher vorzugsweise durch Abmontieren von mindestens einem der Räder (3, 4) vom Rahmen (2) erreicht wird, eine Schale bilden, die einen für die Aufnahme des Rahmens in zusammengeklappter Transportstellung dimensionierten Hohlraum (12) begrenzt, **dadurch gekennzeichnet, dass** der Rahmen (2) ein Gelenkrahmen ist, der im wesentlichen aus einem Rahmen (2A), einer den Rahmen (2A) und das Vorderrad (3) verbindenden Gabel (2B) und einem Arm (2C) besteht, welcher die Tretkurbel (10) und das Übersetzungsgetriebe (11) trägt und den Rahmen (2A) mit dem Hinterrad (4) verbindet, wobei die Gabel (2B) und der Arm (2C) jeweils mit dem Rahmen (2A) durch eine Drehzapfenverbindung (5, 6) mit einer weitestgehend parallel zu der Drehachse der Räder (3, 4) verlaufenden Achse verbunden sind.

2. Fahrrad (1) nach Anspruch 1, **dadurch gekennzeichnet, dass** in der Fahrstellung des Rahmens (2) und in der fluchtenden Stellung der Räder (3, 4) die Felgenbetten (3A, 4A) der Räder (3, 4) sich jeweils beidseitig der Ebene durch die Reifen (3B, 4B) von Rädern (3, 4) erstrecken.

3. Fahrrad (1) nach Anspruch 1, **dadurch gekennzeichnet, dass** die Drehzapfenverbindung (5) zwischen Gabel (2B) und Rahmen (2A) eine in der Fahrstellung des Rahmens verriegelbare Verbindung ist, während die Drehzapfenverbindung (6) zwischen Arm (2C) und Rahmen (2A) eine nicht verriegelbare Verbindung ist, deren winkelige Verschiebung jedoch mittels eines zwischen Rahmen (2A) und Arm (2C) angeordneten ausbaubaren Dämpfers (7) begrenzt ist.

4. Fahrrad (1) nach Anspruch 3, **dadurch gekennzeichnet, dass** der Arm (2C) ein gebogener Arm ist, bei dem einer (2C1) der Schenkel (2C1, 2C2) mit der Drehzapfenverbindung (6) verbunden ist, während der andere Schenkel (2C2) die Form eines Bügels aufweist, der mit dem Antriebshinterrad (4) des Fahrrads verbunden ist, wobei die Kurbeln (10B) der von dem Arm (2C) getragenen Tretkurbel (10) dimensioniert sind, um sich unter dem mit dem Hinterrad (4) verbundenen Schenkel (2C2) des Arms (2C) in der Fahrstellung des Rahmens (2) zu erstrecken.

5. Fahrrad (1) nach einem der Ansprüche 3 bis 5, **dadurch gekennzeichnet, dass** der Rahmen (2) ferner einen Sattel (9) und eine Lenkstange (8) aufweist, welche jeweils lösbar am Rahmen (2A) im Fall des Sattels und an der Gabel (2B) im Fall der Lenkstange montiert sind, wobei der Sattel (9) und die Lenkstange (8) in der Transportstellung des Rahmens (2) von diesem gelöst sind.

6. Fahrrad (1) nach Anspruch 5, **dadurch gekennzeichnet, dass** der Sattel (9) und sein zugehöriges Stützrohr mit dem Rahmen (2A) über einen Gelenkhebel (2D) gekoppelt sind, welcher durch eine Drehzapfenverbindung mit einer weitestgehend parallel zu der Drehachse der Räder (3, 4) verlaufenden Achse mit dem Rahmen (2A) verbunden ist.

7. Fahrrad (1) nach einem der Ansprüche 3 bis 6, **dadurch gekennzeichnet, dass** die Tretkurbel (10) mit Pedalen (10A) ausgestattet ist, die in der Transportstellung des Rahmens gegen die Kurbeln (10B) umgeklappt werden können.

8. Fahrrad (1) nach einem der Ansprüche 1 bis 7, **dadurch gekennzeichnet, dass** die Räder (3, 4), wenn sie nebeneinander und/oder übereinander liegen, miteinander gekoppelt werden können und in dem gekoppelten Zustand eine Position einnehmen, bei der die Flanke des Reifens (3B) eines Rads (3) gegen die Flanke des Reifens (4B) des anderen Rads (4) derart zur Anlage kommt, dass die Ebene der Verbindungsstelle der durch Nebeneinanderlegen und/oder Übereinanderlegen der Räder gebildeten Schale gebildet wird.

9. Fahrrad (1) nach Anspruch 8, **dadurch gekennzeichnet, dass** die Räder (3, 4) durch eine mechanische Verbindung, insbesondere durch Verschraubung der Radachsen (13) oder - naben (14) miteinander gekoppelt sind.
